# EUROPÄISCHE PATENTSCHRIFT

(11) **EP 0 949 481 B1**
(45) Veröffentlichungstag und Bekanntmachung des Hinweises auf die Patenterteilung: **28.05.2003**
(21) Anmeldenummer: 99105486.7
(22) Anmeldetag: 17.03.1999
(51) Int. Cl.: G01B 7/16

(54) **Kapazitives Hochtemperatur-Extensometer**
Capacitive high temperature extensometer
Extensométre capacitif pour temperatures élevées

(30) Priorität: 27.03.1998 DE 19813724
(43) Veröffentlichungstag der Anmeldung: 13.10.1999
(73) Patentinhaber: Framatome ANP GmbH, 91050 Erlangen (DE)
(72) Erfinder: Einzmann, Klaus, Dipl.-Ing (FH), 91350 Gremsdorf (DE); Zeller, Alfons, 63538 Grosskrotzenburg (DE)
(74) Vertreter: Mörtel & Höfner

(56) Entgegenhaltungen:
- EP-A- 0 088 278
- EP-A- 0 205 044
- DE-A- 3 410 840

## Beschreibung

Die Erfindung betrifft eine Vorrichtung zur Weg- oder Dehnungsmessung mit einer Halteeinrichtung, die aus Abschnitten besteht, von denen mindestens zwei voneinander beabstandet an einer Struktur befestigbar sind und mechanisch mit mindestens zwei weiteren Abschnitten verbunden sind, die einander gegenüberliegende, voneinander beabstandete Flächen aufweisen, und mit voneinander beabstandeten Kondensatorteilen, die jeweils an einer der Flächen über ein keramisches Isolatorteil befestigt sind.

Eine derartige Vorrichtung zur Dehnungsmessung ist beispielsweise aus der DE 32 07 805 A1 bekannt. Dabei bilden zwei einander gegenüberliegende Kondensatorplatten, die über Keramikschichten von einem Trägerkörper isoliert sind, einen Kondensator, dessen Kapazität sich in Abhängigkeit von Dehnungen oder Biegungen des Trägerkörpers ändert. Äußere Abschnitte des Haltestreifens sind zur Durchführung einer Dehnungsmessung mit einer zu überwachenden Struktur zu verbinden. Dehnungen oder Biegungen der Struktur führen dann zu einem geänderten Abstand zwischen den Kondensatorplatten und damit zu einer geänderten Kapazität, die meßbar ist und ein Maß für die Dehnung oder Biegung der Struktur ist. Die Keramikschicht ist notwendig, um den Kondensator von den aus Metall bestehenden Haltestreifen elektrisch zu isolieren.

Die bekannte Vorrichtung zur Dehnungsmessung soll auch bei relativ hohen Temperaturen funktionsfähig sein. Dadurch soll eine Überwachung von Strukturen im Kraftwerksbereich, z.B. des Primärkreises in einem Kernkraftwerk oder eines Brenners in einem fossilen Kraftwerk bzw. einer Turbine, möglich sein. Es wird hierzu aber nur vorgeschlagen, die an der zu überwachenden Struktur zu befestigenden Abschnitte des Haltestreifens aus einem Material herzustellen, das vergleichbare Eigenschaften wie das Material der Struktur hat, um Kalibrierung und Befestigung zu erleichtern.

Es hat sich inzwischen herausgestellt, daß bei sehr hohen Temperaturen, beispielsweise bei einer Temperatur von 1100 °C, der Kondensator selbst nicht stets zuverlässig arbeitet.

Der Erfindung lag daher die Aufgabe zugrunde, eine Vorrichtung zur Weg- oder Dehnungsmessung anzugeben, die auch bei sehr hohen Temperaturen, z.B. über 1000 °C, zuverlässige Werte liefert.

Die Aufgabe wird durch den Anspruch 1 gelöst.

Damit wird der Vorteil erzielt, daß es zu keinen mechanischen Spannungen zwischen der Halteeinrichtung, den Isolatorteilen und den Kondensatorteilen kommen kann. Selbst relativ große Dehnungen der Vorrichtung, die bei sehr hohen Temperaturen zu erwarten sind, können die Kondensatorteile nicht relativ zueinander verschieben oder sogar diese von der Halteeinrichtung lösen. Es ist folglich stets eine zuverlässige Messung, die nur von Dehnungen oder Biegungen der Struktur beeinflußt wird gewährleistet. Selbst bei sehr hohen Temperaturen bis zu 1100 °C kann die Zuverlässigkeit des Kondensators nicht durch Wärmedehnungen beeinträchtigt sein.

Die Vorrichtung ist also vorteilhafterweise auch bei sehr hohen Temperaturen, die größer als 1000° sein können, einsetzbar.

Die keramischen Isolatorteile sind durch ein Beschichtungsverfahren auf die Halteeinrichtung aufgebracht. Damit wird vorteilhafterweise eine mechanisch zuverlässige Verbindung gewährleistet.

Auch die Kondensatorteile sind durch ein Beschichtungsverfahren auf die keramischen Isolatorteile aufgebracht. Auch hiermit wird eine mechanisch stabile Befestigung gewährleistet, die auch bei hohen Temperaturen nicht beschädigt wird.

Ein solches Beschichtungsverfahren kann z.B. ein Schleuderverfahren mit anschließendem Sintern sein. Dabei wird das aufzutragende Material auf ein Trägermaterial aufgebracht und eine gleichmäßige Schicht erzeugt. Teile des Trägermaterials, die nicht beschichtet werden sollen, werden vorher abgedeckt. Danach wird das Bauteil gesintert, um die Schicht stabil an das Bauteil anzubinden.

Mit der Kombination aus z.B. Schleuderverfahren und Sintern erzielt man eine besonders stabile Verbindung, so daß sich weder das Isolatorteil von der Halteeinrichtung, noch das Kondensatorteil vom Isolatorteil lösen können.

Die keramischen Isolatorteile bestehen beispielsweise aus einer Siliziumoxidkeramik, die ein guter, besonders wirtschaftlicher Isolator ist.

Die Kondensatorteile bestehen beispielsweise aus einer leitfähigen Keramik. Eine solche leitfähige Keramik hat Eigenschaften eines elektrischen Leiters und kann trotzdem wie eine Keramik verarbeitet werden. Sie kann also, obwohl sie ein elektrischer Leiter ist, z.B. mit dem geschilderten Schleuderverfahren und anschließendem Sintern auf ein Isolatorteil aufgebracht werden.

Die leitfähige Keramik ist beispielsweise eine Perowskite (z.B. LaStrMnO₃ oder LaStrCrO₃), die besonders wirtschaftlich ist.

Mit der Vorrichtung nach der Erfindung wird insbesondere der Vorteil erzielt, daß Isolatorteile und Kondensatorteile fest und zuverlässig mit der Halteeinrichtung verbunden sind, so daß auch bei sehr hohen Temperaturen bis mindestens 1100 °C diese Verbindungen stabil bleiben. Das ist auch gewährleistet, falls die zu überwachende Struktur, wegen hoher Temperaturen, große Dehnungen oder Biegungen erfährt. Es gibt keine mechanischen Spannungen zwischen der Halteeinrichtung, den Isolatorteilen und den Kondensatorteilen, die Fehlmessungen hervorrufen könnten. Die Vorrichtung ist zuverlässig für Dehnungs- und Biegungsmessungen, aber auch für Wegmessungen einsetzbar.

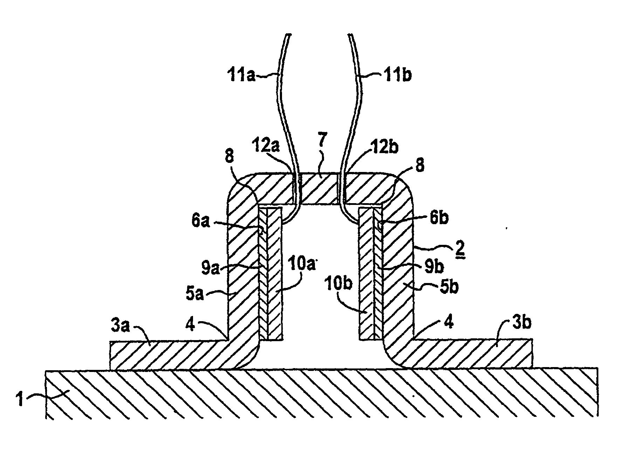

Ein Ausführungsbeispiel der Vorrichtung zur Weg- oder Dehnungsmessung nach der Erfindung wird anhand der Zeichnung näher erläutert:

In der Zeichnung ist in einem Schnitt eine Struktur gezeigt, auf der eine Vorrichtung zur Weg- oder Dehnungsmessung nach der Erfindung angeordnet ist.

Auf einer Struktur 1, die beispielsweise Teil eines Brennraumes sein kann, ist eine Vorrichtung 2 zur Dehnungsmessung angeordnet. Diese weist mehrere Abschnitte auf, von denen zwei Abschnitte 3a und 3b mit der Struktur 1 verbunden sind. Diese Verbindung kann beispielsweise durch nicht dargestellte Schweißpunkte erfolgt sein. Die Abschnitte 3a und 3b sind voneinander beabstandet und sind mechanisch an Knickstellen 4 mit weiteren Abschnitten 5a, 5b der Vorrichtung 2 verbunden. Diese weiteren Abschnitte 5a, 5b weisen einander gegenüberliegende und voneinander beabstandete Flächen 6a, 6b auf.

Im Ausführungsbeispiel sind die weiteren Abschnitte 5a, 5b, die weitgehend senkrecht zu den erstgenannten Abschnitten 3a, 3b und damit zur Struktur 1 verlaufen durch einen zusätzlichen Abschnitt 7 an Knickstellen 8 miteinander verbunden. Die Vorrichtung 2 hat dadurch die mechanisch stabile Form eines Tores.

Auf den einander gegenüberliegenden Flächen 6a, 6b sind keramische Isolatorteile 9a, 9b angeordnet, die ihrerseits Kondensatorteile 10a, 10b tragen, die zusammen einen Kondensator bilden. Diese Kondensatorteile 10a, 10b können aus einer leitfähigen Keramik bestehen.

Somit können sowohl die Isolatorteile 9a, 9b als auch die Kondensatorteile 10a, 10b durch ein Beschichtungsverfahren angebracht sein, das z.B. ein Schleuderverfahren mit anschließendem Sintern ist.

Die Isolatorteile 9a, 9b bestehen beispielsweise aus einer Siliziumoxidkeramik, und die Kondensatorteile 10a, 10b bestehen beispielsweise aus einem Perowskiten, das eine leitfähige Keramik ist.

Die unterschiedlichen Materialien der Halteeinrichtung, der Isolatorteile 9a, 9b und der Kondensatorteile 10a, 10b sind so ausgewählt, daß sie alle weitgehend identische Ausdehnungskoeffizienten haben. Das ist bei den genannten Materialien gegeben. Es kann also nicht aufgrund von Wärmedehnungen zu mechanischen Spannungen zwischen den Teilen aus unterschiedlichem Material kommen, was Meßfehler verursachen könnte.

Selbst bei hohen Temperaturen, z.B. bis 1100 °C, kann eine Dehnung der Struktur 1 zuverlässig gemessen werden.

Die Halteeinrichtung und damit auch die Abschnitte 3a, 3b, 5a, 5b und 7 bestehen in der Regel aus hochwarmfestem Stahl.

Leitungsanschlüsse 11a, b für den Kondensator sind ohne Berührung der Halteeinrichtung, z.B. durch isolierte Durchführungen 12a, 12b in der Halteeinrichtung hindurch, zu einer nicht dargestellten Auswerteeinrichtung hingeführt. Dort kann anhand einer Kapazitätsänderung im Kondensator auf eine Dehnung der Struktur 1 geschlossen werden.

## Patentansprüche

1. Vorrichtung (2) zur Weg- oder Dehnungsmessung
mit einer Halteeinrichtung, die aus Abschnitten besteht, von denen mindestens zwei (3a, 3b) voneinander beabstandet an einer Struktur (1) befestigbar sind und mechanisch mit mindestens zwei weiteren Abschnitten (5a, 5b) verbunden sind, die einander gegenüberliegende, voneinander beabstandete Flächen (6a, 6b) aufweisen, und mit voneinander beabstandeten Kondensatorteilen (10a, 10b), die jeweils an einer der Flächen (6a, 6b) über ein keramisches Isolatorteil (9a, 9b) befestigt sind,
**dadurch gekennzeichnet, daß** jeder der weiteren Abschnitte (5a, 5b), das auf ihm angeordnete keramische Isolatorteil (9a, 9b) und das auf diesem Isolatorteil (9a, 9b) angeordnete Kondensatorteil (10a, 10b) aus Materialien mit weitgehend identischen Ausdehnungskoeffizienten bestehen, daß die keramischen Isolatorteile (9a, 9b) durch ein Beschichtungsverfahren auf die Halteeinrichtung aufgebracht sind und daß die Kondensatorteile (10a, 10b) durch ein Beschichtungsverfahren auf die keramischen Isolatorteile (9a, 9b) aufgebracht sind.

2. Vorrichtung nach Anspruch 1,
**dadurch gekennzeichnet, daß** das Beschichtungsverfahren ein Schleuderverfahren mit anschließendem Sintern ist.

3. Vorrichtung nach einem der Ansprüche 1 oder 2,
**dadurch gekennzeichnet, daß** die keramischen Isolatorteile (9a, 9b) aus einer Siliziumoxidkeramik bestehen.

4. Vorrichtung nach einem der Ansprüche 1 bis 3,
**dadurch gekennzeichnet, daß** die Kondensatorteile (10a, 10b) aus einer leitfähigen Keramik bestehen.

5. Vorrichtung nach Anspruch 4,
**dadurch gekennzeichnet, daß** die leitfähige Keramik eine Perowskite ist.

## Claims

1. Device (2) for deflection or strain measurement, with a holding means comprising portions of which at least two (3a, 3b) can be fastened on a structure (1) spaced apart from each other and are mechanically connected to at least two further portions (5a, 5b) which have faces (6a, 6b) lying opposite each other and spaced apart from each other, and with capacitor parts (10a, 10b) which are spaced apart from each other and are respectively fastened on one of the faces (6a, 6b) by means of a ceramic insulator part (9a, 9b), **characterized in that** each of the further portions (5a, 5b), the ceramic insulator part (9a, 9b) arranged on it and the capacitor part (10a, 10b) arranged on this insulator part (9a, 9b) consist of materials with largely identical coefficients of expansion, **in that** the ceramic insulator parts (9a, 9b) are applied to the holding means by a coating process and **in that** the capacitor parts (10a, 10b) are applied to the ceramic insulator parts (9a, 9b) by a coating process.

2. Device according to Claim 1, **characterized in that** the coating process is a centrifugal process with subsequent sintering.

3. Device according to either of Claims 1 and 2, **characterized in that** the ceramic insulator parts (9a, 9b) consist of a silicon oxide ceramic.

4. Device according to one of Claims 1 to 3, **characterized in that** the capacitor parts (10a, 10b) consist of a conductive ceramic.

5. Device according to Claim 4, **characterized in that** the conductive ceramic is a perovskite.

## Revendications

1. Dispositif (2) de mesure de trajet ou de dilatation, comprenant un dispositif de maintien qui est constitué de tronçons, dont deux (3a, 3b) au moins peuvent être fixés à distance l'un de l'autre sur une structure (1) et sont reliés mécaniquement à au moins deux autres tronçons (5a, 5b), qui ont des surfaces (6a, 6b) mutuellement opposées et à distance l'une de l'autre, et de parties (10a, 10b) formant condensateur à distance l'une de l'autre et fixées respectivement à l'une des surfaces (6a, 6b) par une partie (9a, 9b) en céramique formant isolateur,
**caractérisé en ce que** chacun des autres tronçons (5a, 5b), la partie (9a, 9b) en céramique formant isolateur qui y est disposée et la partie (10a, 10b) formant condensateur, qui est disposée sur cette partie (9a, 9b) formant isolateur, sont en matériau ayant des coefficients de dilatation dans une grande mesure identiques, **en ce que** les parties (9a, 9b) en céramique formant isolateur sont disposées sur le dispositif de maintien par un procédé d'application d'un revêtement et **en ce que** les parties (10a, 10b) formant condensateur sont déposées sur les parties (9a, 9b) en céramique formant isolateur par un procédé d'application d'un revêtement.

2. Dispositif suivant la revendication 1,
**caractérisé en ce que** le procédé d'application d'un revêtement est un procédé de centrifugation suivi d'un frittage.

3. Dispositif suivant l'une des revendications 1 ou 2,
**caractérisé en ce que** les parties (9a, 9b) en céramique formant isolateur sont en une céramique à base de dioxyde de silicum.

4. Dispositif suivant l'une des revendications 1 à 3,
**caractérisé en ce que** les parties (10a, 10b) formant condensateur sont en une céramique conductrice.

5. Dispositif suivant la revendication 4,
**caractérisé en ce que** la céramique conductrice est une perowskite.
